# EUROPEAN PATENT SPECIFICATION

(11) **EP 3 344 707 B1**
(45) Date of publication and mention of the grant of the patent: **15.01.2020**
(21) Application number: 16767042.1
(22) Date of filing: 31.08.2016
(51) Int. Cl.: C09C 3/10, E01C 7/18, E01C 7/30, E01C 11/22, C04B 20/12, C04B 26/26, C04B 20/10, C04B 111/00

(54) **PORO-ELASTIC ROAD SURFACE COMPRISING COATED PARTICLES**
POROELASTISCHER STRASSENBELAG MIT BESCHICHTETEN PARTIKELN
SURFACE DE ROUTE PORO-ÉLASTIQUE COMPRENANT DES PARTICULES ENROBÉES

(30) Priority: 31.08.2015 NL 2015377
(43) Date of publication of application: 11.07.2018
(73) Proprietor: Dura Vermeer Divisie Infra B.V., 2132 LS Hoofddorp (NL)
(72) Inventor: SMAL, Laurentius Alphonsus Maria, 2132 LS Hoofddorp (NL); NAUS, Robertus Wilhelmus Marinus, 2132 LS Hoofddorp (NL); TALMA, Auke Gerardus, 6824 BM Arnhem (NL); NIJHOF, Leonardus Bernardus Gerhardus Maria, 6824 BM Arnhem (NL)
(74) Representative: V.O.
(86) International application number: PCT/NL2016/050606
(87) International publication number: WO 2017/039443

(56) References cited:
- WO-A1-2011/031168
- WO-A1-2015/059335
- DE-A1- 3 712 461
- US-A- 5 262 240

## Description

The present invention relates to coated mineral particles for a wearing course, a composition for making a wearing course, a wearing course, a poro-elastic road surface, a floor, , to a method of making a poro-elastic road surface or a floor, and to the use of coated mineral particles and/or a poro-elastic road surface for reducing traffic noise.

Composite materials composed of aggregate and a polymer have been used as a construction material for several decades. E.g., DE 37 12 461 A1 (published in 1987) relates to a hard covering of aggregate that is bonded by polyurethane to form a water-permeable structure, e.g. for a road. US 5,262,240 describes a process wherein aggregate is coated with a latex to provide the aggregate with a high level of resistance to stripping by water. WO 2015/059335 relates to rail infrastructure consisting of aggregates with a particle size distribution of between 25 mm and 100 mm, covered with a polymer layer comprising a solidified polymer and granular elastomeric material. No attention is paid in these documents to noise effects of such materials.

There is a continuing desire in society to reduce noise from traffic. One way to contribute to a noise reduction is to provide paving with improved acoustic performance.

Open-porous elastic paving is considered to be a promising paving type for noise reduction; the open structure and elasticity contribute to a noise reduction. Therefore RubberRollpave has been developed by Dura Vermeer. It consists of a mixture of rubber particles, mineral particles and a polymeric binder (polyurethane). It is a prefab material, that is manufactured under conditioned circumstances, rolled on a reel for transport and unrolled on site. This product has satisfactory acoustic performance (8 dB(A) at 80 km/h), but it does adhere less to the underlying base layer of the road after it has been applied to construct a road. Also it may suffer from scuffing in the course of time. Therefore, RubberRollpave is particularly suitable for a temporary road surfacing.

Mixtures of rubber particles and mineral aggregate particles in a curable polymer matrix have also been proposed as paving compositions for *in situ* application in road construction. An example thereof is described in EP 1 295 912 A1.

However, it has been found difficult to homogenously disperse rubber particles, e.g. made from used tyres, and mineral particles in a polymer matrix. Moreover, such composition has been found unsatisfactory in the preparation of wearing courses with a high interstitial void content. It is considered that this is due at least partly to the following reason. In road construction the composition for providing the wearing course is typically spread as a layer on top of a support layer (the base course), after which layer formed of said composition is subjected to compaction (rolling). Under influence of the pressure, a fraction of the rubber particles is forced out of the matrix into the interstitial voids. Hereby, the contribution of the rubber to noise reduction is reduced, because these rubber particles do not contribute (as well) to noise reduction. Further, an often occurring problem in open-porous elastic road surfaces is excessive stresses and deformation because of the inhomogeneous dispersion of the rubber particles. Hereby the polymer matrix can be damaged. Further, related to the chosen binder an occurring problem in open-porous elastic road surfaces is visco-elastic creep.

It is a challenge to provide means that can be used to prepare open-porous elastic road surface - generally referred to in the art as **P**oro-**E**lastic **R**oad **S**urfaces [PERS] - having good acoustic performance and a good life-time. On the one hand, high interstitial void volume and high elasticity are advantageous for noise reduction; on the other hand high interstitial void volume and high elasticity generally have an adverse effect on life-time. In particular, known compositions for preparing a PERS have been found unsatisfactory in terms of robustness, due to unsatisfactory adhesion to the underlying layer, scuffing, tearing, as a result of unsatisfactory compatibility of the components of the composition, problems during application of the composition or a low strength.

It is an object of the invention to provide an alternative for known materials to prepare a PERS, in particular an alternative that overcomes one or more of the above mentioned drawbacks or that offers one or more of the advantages mentioned herein below. More in particular, it is an object to provide a paving with good acoustic properties and a prolonged life-time or with improved acoustic properties at a similar life time than known paving such as mentioned above.

It is further an object to provide an alternative for known materials for preparing a floor, in particular a floor of a building frequented by large numbers of people, such as public buildings, shopping centres, leisure centres, sports centres, cultural centres and the like. Such buildings would also benefit from floors with improved acoustic performance , improved mechanical performance or having a reduced risk of slipperiness, when exposed to water.

The inventors have realised that it is advantageous to provide mineral particles and elastic polymer for a paving in a specific manner.

Accordingly, the present invention relates to coated mineral particles for a wearing course, the coated mineral particles comprising a mineral core (1) and an elastic polymer coating (2b), characterized in that the coated mineral particles have a size, as determinable by sieving using a sieve with square mesh, of 10 mm or less, and in that the coating (2b) is composed of microparticles of a first polymer, in a matrix of a second polymer.

Further, the invention relates to a composition for making a wearing course, comprising coated mineral particles according to the invention and a binder for binding the coated particles together.

Further, the invention relates to a wearing course composed of coated particles according to the invention or made from a paving composition according to the invention.

Further, the invention relates to a poro-elastic road surface or a floor comprising a wearing course according to the invention.

Further, the invention relates to a method for making a poro-elastic road surface or floor according to the invention, comprising applying a layer comprising coated particles according to the invention or a layer comprising a composition according to the invention to a surface of a base course and binding the particles to form the poro-elastic road surface on the base course.

The invention provides a way to provide a PERS with satisfactory life-time and acoustic properties, in particular a PERS which is improved in at least one of these aspects. In addition, a PERS according to the invention has advantageous water drainage properties, due to its open-porous nature.

The coated particles are also suitable for use in the preparation of other surfaces than PERS. In principle, they may be used for any infrastructural surface. In particular, the coated particles may be used for a wearing course of a floor of a building or of an outdoor paved area, such as a yard. In particular the particles may be used for the construction of a floor of a construction selected from the group of public buildings, shopping malls, sports-centres, leisure centres, exposition centres and the like. Advantageous properties like acoustic performance, mechanical performance or porosity are also of interest for such wearing courses. The porosity reduces the risk of slippery floors, when wet.

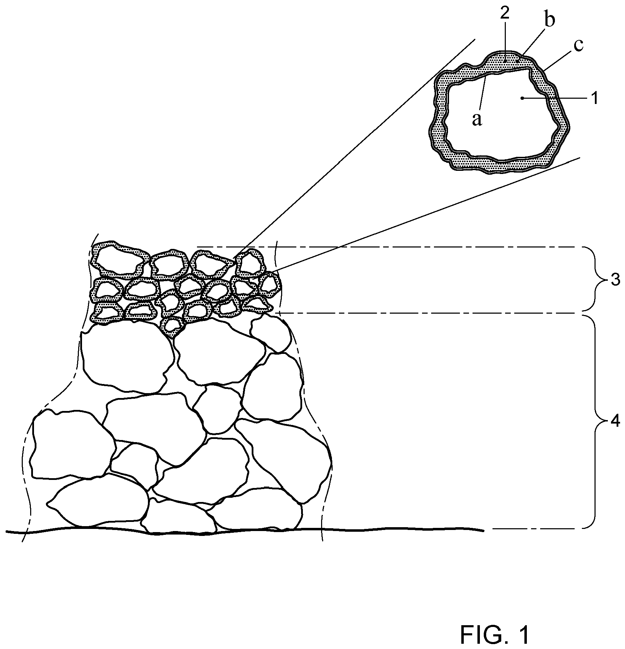

Figure 1 schematically shows coated particles and a PERS according to the invention. The PERS comprises a wearing course (3) upon a base course (4). The coated particles comprise a mineral core (1) and an elastic polymer coating (2a). Coating layer (2a) is an optional adhesive layer. To make a wearing course, the coated particles are usually bound together by an elastic polymer binder, which is coated to the outer surface of the coated mineral particles (2c). The layer 2c can be applied at the road construction site, or in a factory (from which it typically will be transported to the road construction site within a couple of hours, i.e. before the cinder layer cures fully).

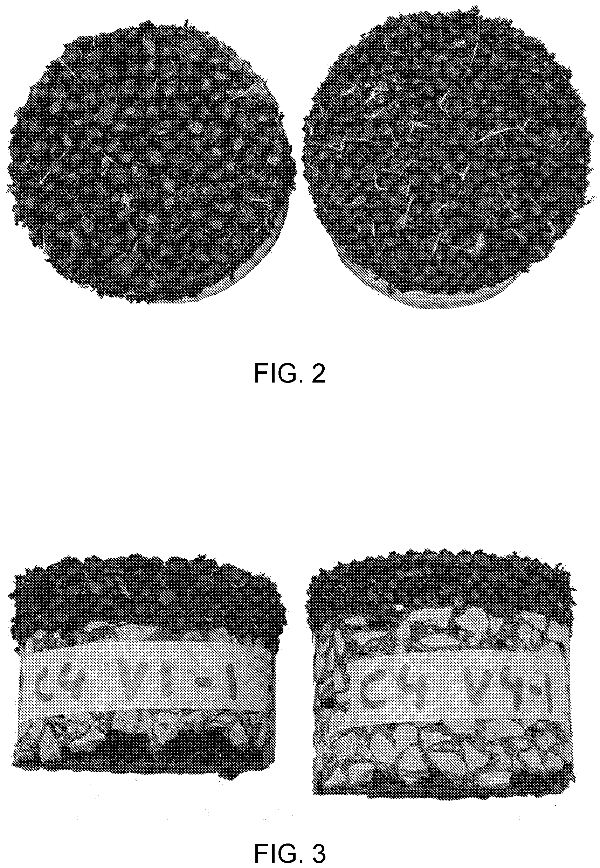

Figures 2 and 3 show photographs of a part of a PERS upon a base course according to the invention (top view and side view respectively).
Figure 4 schematically shows the production of coated mineral a method for preparing a PERS according to the invention.
Figure 5 schematically shows a schematic configuration detail of coated mineral particles bonded together.

The term "or" as used herein means "and/or" unless specified otherwise.

The term "a" or "an" as used herein means "at least one" unless specified otherwise.

When referring to a "noun" (e.g. a compound, an additive *etc*.) in singular, the plural is meant to be included, unless specified otherwise.

The term "substantial(ly)" or "essential(ly)" is generally used herein to indicate that it has the general character or function of that which is specified, for instance when referring to essentially spherical it means that it has at least the general appearance of a sphere. When referring to a quantifiable feature, these terms are in particular used to indicate that it is for more than 50 %, in particular at least 75 %, more in particular at least 90 %, even more in particular at least 95 % of the maximum that feature. When referring to an amount-related feature, the amount in terms of weight is meant, unless specified otherwise.

When using the term 'about' this in particular signifies a deviation of 10 % or less, more in particular of up to 5 %, more in particular of up to 3 %, more in particular up to 2 % from the indicated value.

When referring to a size or diameter, the size as determined by sieving using a sieve with square mesh is meant, unless specified otherwise.

Within the context of the invention, a polymer coating respectively a wearing course or a road surface is elastic in particular in that it at least shows elastic behaviour when a force is applied in direction perpendicular to its surface (i.e. in the vertical direction in case of a horizontal road surface), typically a force comparable to forces that are applied during normal use of a motorway (forces applied by cars and trucks on the road). Preferably, an elastic coating or road surface shows elastic behaviour in any direction.

For the purpose of clarity and a concise description, features are described herein as part of the same or separate embodiments, however, it will be appreciated that the scope of the invention may include embodiments having combinations of all or some of the features described.

The term mineral is generally used in the art for inorganic materials that are solid under temperature conditions existing in a terrestrial climate (typically below 100 °C) and suitable for use in construction of infrastructural elements, such as roads. The mineral core is usually selected from construction aggregate materials known for preparing wearing courses. Suitable mineral aggregate particles include natural mineral aggregates, which may be particles of sedimentary calcareous rocks, particles of igneous rocks, particles of metamorphic rocks and artificial mineral aggregates. Preferred natural mineral aggregates are limestone, dolomite, gravel, granite, basalt, porphyry and quartzite minerals. Preferred artificial materials, suitable for the mineral core, are slag, in particular steel slag, and refractory ceramic materials, in particular alumina. The ceramic is preferably in the form of ceramic balls, in particular alumina balls. The alumina, preferably is alpha-alumina. The ceramic balls are usually made from industrial alumina and other refractory raw materials by cool isostatic pressing and high temperature (e.g. at about 1480°C) using kiln firing and sintering. Suitable ceramic balls are commercially available, e.g. from HuaMing Alumina (China), which supplies alumina balls having high density (3.6 g/cm³), ultrahigh hardness (Mohs scale 9).

The coated mineral particles are at least substantially coated with an elastic polymeric coating. The coating adds resilience to the particles. The inventors found that the coating in particular improves the mechanical impedance, popularly referred to as the hammer effect of traffic. Mechanical impedance is one of the important contributors to traffic noise. The effect of mechanical impedance is in practice tested by providing a PERS (or other surface of an infrastructural element) on a square 50 cm x 50 cm concrete tile having a thickness of 5 cm and measuring the impedance at 20°C , using a 5.5 kg hammer with an impact frequency of 100-800 Hz. Alternatively, a method with mechanic agitator can be used for measurements in the frequency range of 125-4000 Hz.

Although it is contemplated that the mineral core of the particles does not have to be covered completely in order to have a positive effect, a higher coverage degree is generally thought to be more effective, and therefore it is preferred that the core is essentially completely covered with the elastomer coating.

As will be understood by the skilled person, the elastic polymer coating preferably has a glass transition temperature below the lowest temperature that is generally encountered in the area in which the particles are applied, in particular at least 5 °C below such temperature. Thus a preferred glass transition temperature depends on the climate in which the invention is employed. Preferably the elastic polymer coating has a glass transition temperature below -20 °C, in particular below -30 °C, more in particular below -40 °C.

The elastic polymer coating usually has a hardness in the range of 60-80 Shore A, preferably of about 70 Shore A. Shore hardness can be determined on the basis of ASTM D2240.

Preferably, the elastic polymer coating comprises microparticles of an elastomer, selected from the group of copolymers of styrene and butadiene [SB], such as poly(styrene-butadiene-styrene) [SBS]; natural rubber; alkylene-vinyl carboxylates polymers, such as ethylene-vinyl acetate [EVA] and maleic anhydride-grafted EVA [MA-EVA]; ground tire rubber [GTR]; and combinations thereof. Good results have in particular been achieved with GTR microparticles.. Apart from favourable technical characteristics, GTR is advantageous because it is readily available and adds a useful purpose to this waste material. GTR microparticles can be obtained from commercially available GTR, e.g., by cryogenic grinding.

The elastomeric microparticles may comprises one or more additives, generally known in the art of rubber manufacturing, such as one or more fillers, e.g. sooth or silica.

The elastomeric microparticles further function as additional barrier between the mineral cores. That is: they prevent the mineral cores from contacting each other, thereby contributing to the noise reduction. They also act as impact modifier and increase the toughness and mechanical strength of the coating layer.

The microparticles can be prepared by crosslinking the elastomer, followed by milling and sieving the crosslinked elastomer in order to obtain microparticles with a diameter in the above-mentioned size range.

The elastomers can be crosslinked using any crosslinking technique suitable for the specific elastomer. SB, for instance, can be cured by conventional sulphur cure techniques. EVA and MA-EVA can be crosslinked by treatment with a peroxide. Examples of suitable peroxides for this purpose are 2,5-dimethyl-2,5-di(tert-butylperoxy)hexane, 1-di(tert-butylperoxy)-3,3,5-trimethylcyclohexane, butyl 4,4-di(tert-butylperoxy)valerate, di(tert-butylperoxyisopropyl)benzene, and dicumylperoxide.

Besides contributing to mechanical properties, the microparticles of the elastomer have been found to offer an advantage during processing of the coated mineral particles, as they contribute to obtaining coated mineral particles that have reduced or no stickiness at ambient temperature. Thus, the presence of the microparticles of the elastomer is advantageous to provide coated mineral particles with desirable flowing properties, prior to using the mineral particles in the formation of a PERS or (a wearing course of) another infrastructural element..

In principle, the coating method may be applied using a coating technology which is known *per se,* e.g. from Seeds Handbook Processing and Storage, B.W. Desai ISBN 0824700422. Particularly suitable is drum coating.

In an embodiment, the surfaces of the mineral particles are provided with a polymerisable composition comprising monomer or prepolymer for forming the coating, after which the composition is polymerised to form the coating.

In particular, the mineral particles are coated with microparticles of first polymer, preferably the elastomer, in particular crosslinked elastomer, and a second curable polymer or curable polymerisable composition, after which the dispersion of both is subjected to curing, whereby the coating is formed. In an alternative embodiment, the mineral particles are coated with said curable polymer or curable polymerisable composition without the microparticles of the first polymer.

As used herein, microparticles are particles having a 'longest enveloping circle' diameter smaller than 500 µm, in particular 1-300 µm, more in particular 40-150 µm, as determinable by (electron) microscopy.

Thus, in an advantageous embodiment, the coated mineral particles have an elastic polymer coating comprising microparticles of a first polymer, preferably elastomer particles, more preferably crosslinked elastomer particles, in particular GTR, in a matrix of a second polymer. Thus, the microparticles and the matrix of the second polymer form a composite material. As an alternative to GTR, e.g. crosslinked MA-EVA may be used.

The second polymer is usually selected to be compatible with the microparticles of the first polymer (satisfactory dispersibility and adherence) and with the mineral aggregate material. If desired, an adhesive layer (2a), e.g. an epoxy layer, is provided on the surface of the mineral aggregate (1) to improve binding with the elastic polymer coating (2b) (See Figure 1).

In a preferred embodiment, said second polymer is a polyurethane. Polyurethanes belong to the class of compounds called reaction polymers. Polyurethanes show good elastic properties and binds the mineral aggregate very well, such that the tendency for the mineral aggregate to migrate out of the composite material. The polyurethane may be a homopolymer or a copolymer. The properties of the polyurethane elastomer is tailored by choosing the molecular chain structure and the content of the hard(di-isocyanate) and the soft(polyol)segments.

The preparation of polyurethanes is well known. Polyurethanes are produced by reacting an isocyanate containing two or more isocyanate groups per molecule (R-(N=C=O)n ≥ 2) with a polyol containing on average two or more hydroxy groups per molecule (R'-(OH)n ≥ 2), in the presence of a catalyst or by activation with ultraviolet light.

Long, flexible segments, contributed by the polyol, give soft, elastic polymer. High amounts of crosslinking give tough or rigid polymers. Long chains and low crosslinking give a polymer that is very stretchy; short chains with lots of crosslinks produce a hard polymer while long chains and intermediate crosslinking give a polymer useful for making foam.

Suitable isocyanates include aromatic isocyanates, such as diphenylmethane diisocyanate (MDI) and toluene diisocyanate (TDI), and aliphatic isocyanates, such as 1,6-hexamethylene diisocyanate (HDI), isophorone diisocyanate (IPDI) and 4,4'-diisocyanato dicyclohexylmethane (hydrogenated MDI). It is also possible to use an isocyanate with more than two isocyanate groups per molecule, such as polymeric diphenylmethane diisocyanate, which is a mixture of molecules with two, three, four, or more isocyanate groups.

Chain extenders (functionality = 2) and cross linkers (functionality = 3 or higher) are typically hydroxyl or amine terminated compounds that can be used to modify the polymer morphology of polyurethane. The elastomeric properties of these materials are derived from the phase separation of the hard and soft copolymer segments of the polymer, such that the urethane hard segment domains serve as cross-links between the amorphous polyether (or polyester) soft segment domains. The soft segments, which are formed from relatively high molecular weight polyols, are mobile and are normally present in coiled formation, while the hard segments, which are formed from the isocyanate and chain extenders, are stiff and immobile. Because the hard segments are covalently coupled to the soft segments, they inhibit plastic flow of the polymer chains, thus creating elastomeric resiliency. Upon mechanical deformation, a portion of the soft segments are stressed by uncoiling, and the hard segments become aligned in the stress direction. This reorientation of the hard segments and consequent powerful hydrogen bonding contributes to high tensile strength, elongation, and tear resistance values. The choice of chain extender also determines flexural, heat, and chemical resistance properties. The most important chain extenders are ethylene glycol, 1,4-butanediol (1,4-BDO or BDO), 1,6-hexanediol, cyclohexane dimethanol and hydroquinone bis(2-hydroxyethyl) ether (HQEE). All of these glycols form polyurethanes that phase separate well and form well defined hard segment domains, and are melt processable. Diethyltoluenediamine is particular suitable for polyurethane elastomer formulations.

Specific examples of chain extenders include ethylene glycol, diethylene glycol, triethylene glycol, tetraethylene glycol, propylene glycol, dipropylene glycol, tripropylene glycol, 1,3-propanediol, 1,3-butanediol, 1,4-butanediol, neopentyl glycol, 1,6-hexanediol, 1,4-Cyclohexanedimethanol, HQEE, ethanolamine, diethanolamine, methyldiethanolamine, phenyldiethanolamine, diethyltoluenediamine, dimethylthiotoluenediamine

Specific examples of crosslinkers include glycerol, trimethylolpropane, 1,2,6-hexanetriol, triethanolamine, pentaerythritol, N,N,N',N'-tetrakis (2-hydroxypropyl) ethylenediamine.

The preparation of polyols is well known. Suitable polyols include polyether polyols and polyester polyols. Polyether polyols are usually made by polymerizing one or more alkylene oxides, such as ethylene oxide, propylene oxide or butylene oxide. A much used polyol is obtained by co-polymerizing ethylene oxide and propylene oxide with a suitable polyol precursor. Polyester polyols are made similarly to polyester polymers. Polyols used to make rigid polyurethanes relatively short chain lengths , while those used to make flexible polyurethanes have relatively large chain lengths.

The polymerisation reaction to prepare polyurethane is generally catalysed by a catalyst or promoted by ultraviolet light.

Typical catalysts for use in the preparation of polyurethane are selected from the group of amine compounds and metal based catalysts, such as metal complexes. Conventional amine catalysts are tertiary amines such as triethylenediamine (TEDA, 1,4-diazabicyclo[2.2.2]octane or DABCO), dimethylcyclohexylamine (DMCHA), and dimethylethanolamine (DMEA). Tertiary amine catalysts are selected based on whether they drive the urethane (polyol+isocyanate, or gel) reaction, the urea (water+isocyanate, or blow) reaction, or the isocyanate trimerization reaction (e.g., using potassium acetate, to form isocyanurate ring structure). Secondary amines that contain a hydroxyl group or secondary amines, which react into the polymer matrix, can also be used as a catalyst, thereby reducing the amount of amine that can come out of the polymer.

Preferred metal complexes for use as a catalyst in the polyurethane preparation are tin complexes, in particular dibutyltin dilaurate, and bismuth complexes, in particular bismuth octanoate.

Optionally a surfactant is used to modify the characteristics of the polyurethane polymer. Examples thereof include polydimethylsiloxane-polyoxyalkylene block copolymers, silicone oils and nonylphenol ethoxylates. A surfactant may e.g. be used to as air release agent, as anti-foaming agent, as wetting agent or to avoide surface defects.

Epoxy bitumen is another preferred second polymer for the matrix wherein the coated particles are embedded.

The weight to weight ratio of the first polymer (elastomeric microparticles) to said second polymer (matrix polymer) is preferably 1:2 to 5:1, more preferably 0.75:1 to 4:1, in particular 1:1 to 2:1, more in particular about 1.25:1.

In addition to the second polymer, such as polyurethane, and the microparticles, said elastic polymer coating may contain aminopropyl silane, which may improve the adhesion with the mineral particles. It may also comprise fibres, e.g. aramid, polyester, or rayon fibres, in order to improve the mechanical strength of the coating layer. Such fibres preferably have a size of about 8 mm or less, more preferably of 1-6 mm, in particular 3-4 mm. Said size of the fibres is the size as determinable by microscopy, using the longest enveloping circle.

The microparticles are preferably present in the matrix of second polymer in a weight fraction of 25-75 wt%, more preferably 35-70 wt% most preferably 45-65 wt%, based on the total weight of the microparticles plus the second polymer. The microparticles are usually essentially fully embedded in the matrix. Accordingly, the outer-surface of the coating is generally at least substantially free of microparticles substantially protruding from the outer surface. Thus, advantageously, the microparticles do not significantly alter the surface roughness of the coating. In view thereof, preferably 90-100 vol % of the microparticles has a diameter that is less than half the thickness of the elastomer coating layer, more preferably less than one third the thickness of the elastomer coating layer, in particular less than one fourth the thickness of the elastomer coating layer.

In an embodiment wherein microparticles are protuberant, the degree of protuberance is typically less than 50 % of the microparticle diameter, in particular less than 20 % of the microparticles.

The weight to weight ratio of elastic polymer coating to mineral particle usually is in the range of 25:75 to 55:45, preferably in the range of 30:70 to 50:50, in particular in the range of 35:65 to 45:55. As a rule of thumb, the higher the density of the mineral aggregate, the lower the weight fraction of the coating needs to be in order to achieve a specific degree of coverage with the coating and thickness of the coating. In particular for steel slag, the weight to weight ratio of elastic polymer coating to mineral particle usually is in the range of 10:90 to 40:60, preferably in the range of 15:85 to 35:65, in particular in the range of 20:80 to 30:70.

In terms of total weight, the mineral content of the particles usually is 60-90 wt. % based on the total weight of the particles, preferably 65-85 wt. %, in particular 70-80 wt. %, based on the total weight of the particles.

The elastic polymer coating content of the particles usually is 5-50 wt. %, based on the total weight of the particles, preferably the 10-45 wt. %, more preferably 10-40 wt. %, in particular 15-35 wt. %, more in particular 20-30 wt. %, based on the total weight of the particles. The balance of the weight of the particles, if any, is formed of one or more optional components, such as components forming one or more optional layers, in particular one or more layers selected from the group of adhesive layers or adhering elastomer coating to the core, a layer with binding agent for binding coated mineral particles to each other and a sealing layer.

The elastomer coating layer usually has a thickness of less than 1 mm, in particular of 10-700 µm, more in particular of 80-500 µm.

In an embodiment, the elastomer coating layer is directly attached to the surface of the mineral particles, e.g. as described above.

In a specific embodiment, an intermediate adhesive layer (layer (2a) in Figure 1) is present between the core and the elastic polymer coating. Depending on the core material and the elastic polymer - particularly the second polymer matrix - suitable adhesive materials may be selected based on known adhesives and the information disclosed herein. In particular, a preferred adhesive material for the adhesive layer between the core and the elastomer is an epoxy adhesive with silane or amine coupling agent groups.

Epoxy resins are well known. In an advantageous embodiment, the epoxy resin is selected from the group consisting of bisphenol A epoxy resin, bisphenol F epoxy resin, Novolac epoxy resin, aliphatic exoxy resins and glycidylamine epoxy resins.

Aliphatic epoxy resins are typically formed by glycidylation of aliphatic alcohols or polyols. The resulting resins may be monofunctional (e.g. dodecanol glycidyl ether), difunctional (butanediol diglycidyl ether), or higher functionality (e.g. trimethylolpropane triglycidyl ether). An aliphatic epoxy resin is usually used in combination with another epoxy resin, in particular to modify (reduce) the viscosity of other epoxy resins. A sub-class of aliphatic epoxy resins is formed by the cycloaliphatic epoxy resins, which contains one or more cycloaliphatic rings in the molecule (e.g. 3,4-epoxycyclohexylmethyl-3,4-epoxycyclohexane carboxylate). These offer significantly higher temperature resistance than the non-cyclic aliphatic epoxy resins.

Glycidylamine epoxy resins are formed when aromatic amines are reacted with epichlorhydrin. Specific examples include triglycidyl-p-aminophenol (functionality 3) and N,N,N,N-tetraglycidyl-4,4-methylenebis benzylamine (functionality 4).

For strong mechanical, chemical and heat resistance properties linear epoxy resins can be cured to form three-dimensional cross-linked thermoset structures. Curing may be achieved by reacting an epoxy with itself (homopolymerisation) or by forming a copolymer with polyfunctional curatives or hardeners. In principle, any molecule containing a reactive hydrogen may react with the epoxide groups of the epoxy resin. Common classes of hardeners for epoxy resins include amines, acids, acid anhydrides, phenols, alcohols and thiols. The epoxy curing reaction may be accelerated by addition of small quantities of accelerators. Tertiary amines, carboxylic acids and alcohols (especially phenols) are effective accelerators.

When preparing a wearing course, in particular when preparing a PERS, the coated mineral particles are usually subjected to a bonding step. For this, usually a binder is used. In specific embodiment, the binder has a good affinity with the coated mineral particles. If present, the binder preferably, is present in a binding layer (layer (2c) in Figure 1), comprising the binder. The binder layer is more remote from the core than the elastic polymer coating. Binders may be selected from known binding agents for wearing coarse compositions based on mineral aggregate and rubbers. They are generally selected from binders that adhere well to the coated particles. Thus, in particular a binder may be used that is of the same polymer class as the polymer used for the coating of the particles. Suitable binders include bitumen based binders and polyurethane based binders. A preferred bitumen based binder is epoxy-bitumen. Polyurethane may advantageously be applied as such or in combination with another binder, such as a polyurethane-bitumen binder. Polyurethane-bitumen is a particularly preferred binder for binding the coated particles.

In an advantageous embodiment, the binder is present in a composition further comprising a additive for modifying the binding properties of the binder. In particular an adhesion promoter may be present. Such agents are generally known in the art.

The adhesive layer (2a) and the binding layer (2c) may be useful in improving the strength of the system; in particular its resistance to delamination as a result of mechanical friction, weather conditions (e.g. frost, rain, humidity). In order to resist delamination, the interfaces between the mineral particles and the coating layer(s) must be very strong. The adhesive and binding layers can improve this interaction.

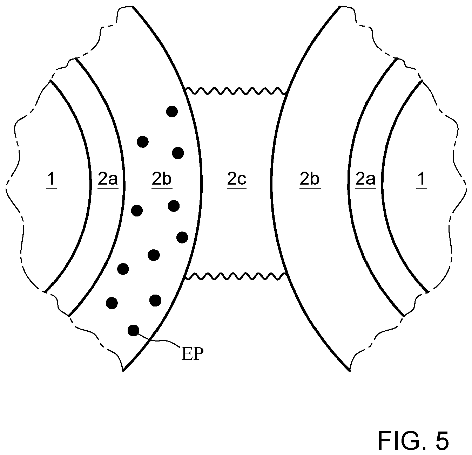

It is also possible to use one or more additives to improve the interfaces (in particular adherence) between two material phases in coated particles or a wearing course, in particular for a PERS, according to the invention. These interfaces are schematically shown in Figure 5.

The adhesion at the interface between mineral particle (1) and adhesive layer (2a) or (in the absence of layer 2a) between mineral particle (1) and elastic coating (2b) can be improved by a coupling agent, such as a silane coupling agent. Preferred silane coupling agents, in particular for an interface between the mineral and a polyurethane or epoxy based layer, are amino silanes, such as aminoalkyl(tri-alkoxy)silanes and mercapto silanes, such as mercapto-alkyl(tri-alkoxy)silanes (see also above). In particular, preferred are 3-amino propyl (tri-methoxy) silane; 3-mercapto propyl(tri-(methoxy) silane, 3-amino propyl (tri-ethoxy) silane; and 3-mercapto propyl(tri-ethoxy) silane.

For improvement of the adhesion at the interface between adhesive layer (2a) and elastic coating (2b) in particular an agent may be used selected from the group consisting of bis polyamines, tris poly amines; bis poly alcohols, tris polyalcohols, polythiols and poly isocyanates.

For improvement of the adhesion at the interface between elastomeric microparticles (EP) and elastic coating (2b) in particular an agent may be used selected from the group consisting of bis polyamines, tris poly amines; bis poly alcohols, tris polyalcohols, polythiols and poly isocyanates.

For improvement of the adhesion at the interface between binder (2c) and elastic coating (2b) in particular an agent may be used selected from the group consisting of bis polyamines, tris poly amines; bis poly alcohols, tris polyalcohols, polythiols and poly isocyanates.

As an alternative to added coupling agents, or in addition thereto, for improving interaction at the interface of two polymeric phases, an excess of one of the components can be provided in both the phases such that residual functional groups of one phase at the interface can react with residual functional groups of the other phase at the interface. The skilled person will know how to select which component to use in excess on the basis of the information disclosed herein in combination with common general knowledge. E.g. in an epoxy resin and polyurethane system residual functional groups can react with a cross-linker or resin of the other system. In this way also a gradual change in properties between the systems can be achieved.

For an advantageous acoustic performance, in particular of a PERS according to the invention, in general, the coated mineral particles have a size, as determined by sieving using a sieve with square mesh, of 10 mm or less, Usually, the size of the coated mineral particles is at least 1 mm. Preferably, the size of the coated mineral particles is in the range of 3-9 mm, in particular in the range of 4-7 mm.

In order to provide particles suitable for constructing a wearing course, in particular for a PERS, with a desirable open-porous character, a plurality of the coated mineral particles of the invention usually has a interstitial void fraction, when packed together in a random close packing (RCP), of more than 20 %, preferably of preferably 22-35 %, in particular of 24-32 % . The interstitial void fraction can be determined routinely, by filling a container randomly with the particles, and then the container is shaken or tapped until the objects do not compact any further, at this point the packing state is RCP. The interstitial volume fraction can then be determined by determining the volume of fluid the is needed to fill the interstitial volume and divide it by the volume of the container filled with the particles.

The skilled person will be able to provide a plurality of particles with a desired interstitial void fraction, based on common general knowledge, the information disclosed herein, the information disclosed in the prior art cited herein and optionally a limited amount of routine testing. One way to provide a plurality of particles with a relatively high interstitial void fraction is to provide particles with a relatively homogeneous particle size distribution.

Preferably, 90-100 % of the volume, more preferably at 95-100 %, in particular 99-100 % of the volume of the particles is formed by particles having a size in the range of 1-10 mm.

Preferably, 80-100 % of the volume, more preferably 90-100 %, in particular 98-100 % of the volume of the particles is formed by particles having a size in the range of 3-9 mm.

Preferably, 70-100 % of the volume, more preferably 80-100 %, in particular 90-100 %, more in particular 95-100 % of the volume of the particles is formed by particles having a size in the range of 4-7 mm.

The geometry of the coated particles can also have an effect on the interstitial void fraction. In particular, advantageous are coated particles of which the core is made of crushed natural or artificial mineral. Crushing generally gives rise to a plurality of particles with irregular geometry, contributing to a good interstitial void volume.

Further, the invention relates to a composition for making a wearing course comprising coated mineral particles according to the invention and one or more other components for use in the construction of an infrastructural element, preferably a PERS. Suitable further components are known in the art for wearing courses. Such components may in particular be selected from the group of binders for aggregate particles, binding modifiers and pigments.

In a preferred embodiment, the composition for making a wearing course comprises a separate binder (not forming part of the coated particles), which may be a binder as described elsewhere herein. A polyurethane-bitumen is a preferred binder in the composition. Preferably, the binder is present in combination with one or more binding modifiers, as described elsewhere herein. If present, the weight to weight ratio of the binder (separate from binding agent forming part of the coated mineral particles) to coated mineral particles preferably is 5:95 to 15:85.

A PERS or other surface of an infrastructural element according to the invention typically comprises an open-porous elastic layer composed of coated particles according to the invention or made with a composition according to the invention.

For good acoustic performance, a PERS or surface of another infrastructural element usually has an average thickness of more than 10 mm. The thickness usually is about 4 cm, or less. Above a thickness of 4 cm the additional contribution to noise reduction, if any is usually relatively small. Preferably the thickness is in the range of 1-3 cm, in particular in the range of 1-2 cm. For good acoustic performance - on average - the thickness of the wearing coarse is usually at least 1.5 times the size of the coated particles, preferably at least 2.0 times the size of the coated particles, in particular 2.5-4 times the size of the coated particles.

The surface of the infrastructural element, in particular the PERS usually has an interstitial void content of more than 20 %, preferably of 22-35 %, in particular of 24-32 %, e.g. about 28 %.

Usually, the PERS comprises
- 50- 80 wt. %, preferably 60-75 wt. % mineral
- 20-40 wt. %., preferably 25-35 wt. % organic polymers (elastic polymeric coating material (elastomeric microparticles and matrix polymer), binder)
- 0 - 15 wt. %, preferably 0.1-5 wt. % other components.

In an advantageous embodiment, a surface made with coated particles according to the invention, such as a PERS, has improved mechanical impedance compared to a comparable surface made with uncoated mineral aggregate particles that has otherwise essentially the same composition.

Advantageously, a road surface according to the invention offers a noise reduction of at least about 10 dB, compared to a reference road surface (ISO 10844 0/8), based on a traffic mix of 85% Light motorised vehicles, and 15% heavy motorised vehicles moving with a velocity of 115 and 85 km/hr respectively (the so called IPG-mix from Innovatieprogramma geluid, httt)://www.innovatieprogrammageluid.nl/). Noise reduction is determinable with the AOT (Acoustic Optimisation Tool, http://www.speron.net/index.html).

If desired, on the outer (upper) surface of a surface made with coated particles according to the invention, such as the poro-elastic road surface, an additional material is provided to improve skid resistance to the surface. For this, a conventional top layer material can be used, such as mineral aggregate e.g. sand, or artificial aggregate. The particles for this top layer are typically much smaller than the mineral cores. It is also possible to use fibrous materials, in particular fibres of an organic polymer, such as aramid fibres to improve skid resistance.

The coated particles are preferably used for making a poro-elastic surface of a road. In view of improving acoustic performance, in particular motor ways are considered to benefit from the invention.

Other infrastructural elements can adequately be provided with coated particles or a composition of the invention. In a specific embodiment, the wearing courses is selected from the group of wear courses of parkings, dockyards and airport-runways. Further, the particles in particular are useful to provide floors, such as floors of buildings, such as shopping-malls, sports-centres, exposition centres, cultural centres, leisure centres, public buildings, etc. Further, the particles in particular are useful for providing an outdoor paved area, such as a parking area, a yard, a paved sports court, a playground.

As mentioned above, the invention further relates to a method for making a poro-elastic surface, in particular a wearing course of a road having a poro-elastic road surface.

The wearing course is the upper layer in a roadway, airfield, dockyard construction, an(other) paved area or the upper layer of a floor. The wearing course is typically placed on the base course, which is normally placed on the sub-base, which rests on the subgrade.

The coated particles or the composition for making a wearing course can be applied by spreading, based on known technology , whereby a surface layer of the particles/composition is formed.

The applied layer is then usually subjected to compacting, in particular by rolling, which is also a commonly known technique.

Once the particles are properly distributed on the support layer, the binding is carried out.

The invention is now illustrated by the following example.

### Examples

### Example 1: preparation of an EVA for the elastomeric polymer particles (EP).

An Agila two-roll mill (70/70°C) was used for making a mixture of 225 parts by weight EVA (Escorene ultra UL00328, Exxon Mobile), 75 parts by weight ethylene acrylate based terpolymer (Lotader E-EA-MAH 4700, Arkema) and 9 parts by weight peroxide based curing agent (Perkadox 14-40B-pd, AkzoNobel). Curing behaviour was measured on an Alpha Technologies MDR2000E Rheometer at 180°C. Sheets were compression moulded at 180°C for 25 minutes in a mould of 5mm thickness. Granulate was made by cryogenic grinding (to particle size of less than 0.5 mm).

### Example 2: Preparation of GTR elastomeric polymer particles (EP)

Commercially available GTR was purchased and subjected to cryogenic grinding to obtain GTR microparticles.

### Example 3: method for making coated mineral particles and a PERS according to the invention.

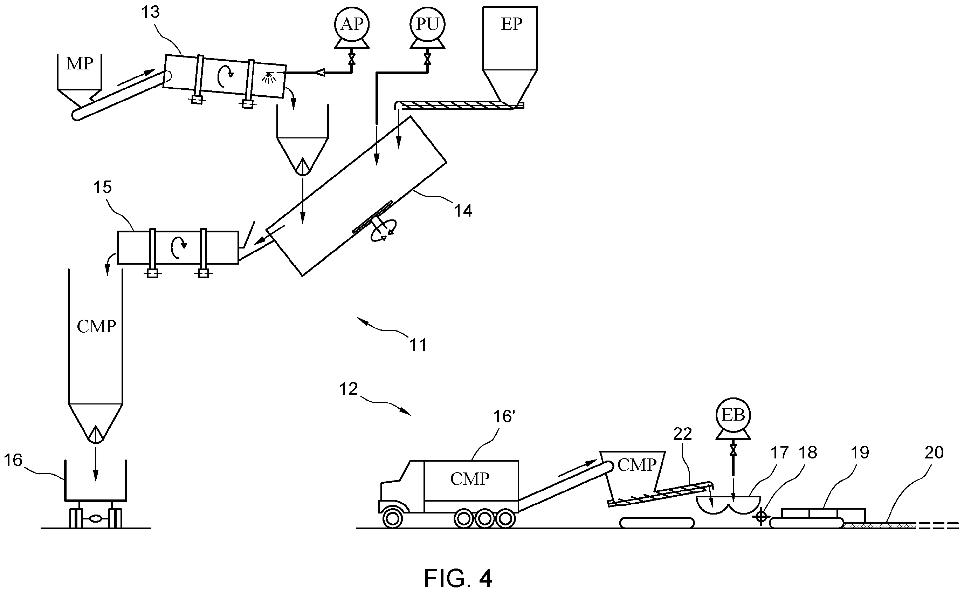

Figure 4 schematically illustrates an off-site method for preparing coated mineral particles according to the invention (11) combined with a method for making a PERS according to the invention (12). It is also possible to combine preparation of coated and mineral particles and the method for making a PERS (20) at a road construction site.

The (pre)fabrication of the coated mineral particles (MP) is done by drying the non-coated mineral particles in a drum dryer (13), wherein the particles are contacted with hot air. Before cooling down an adhesion promotor (AP) is preferably added, which adheres to the surface of the mineral particles ('1' in Figure 1) to form an adhesive layer ('2a' in Figure 1). In the coating unit (14), usually a batch coating unit, the polyurethane (PU) or other matrix polymer (second polymer) and the elastomer microparticles (EP) are dosed to form an elastic coating ('2b in Figure 1) around the individual mineral particles. After curing in a curing drum (15) the coated mineral particles (CMP) are stored in a bulk storage (21), from which they can be loaded in a bulk-truck (16). By bulk-truck delivery (16') the coated mineral particles (CMP) are transported to the finishing unit at the jobsite. The finishing unit is a self-propelled unit with dosing and storage units for the coated mineral particles (22) and dosing and storage units for the elastic binder (EB; '2c' in Figure 1) for binding the coated particles together to form a PERS. Both are dosed in the mixer (17) and spread by a spreading conveyor (19) in front of a finishing screed (19). The screed is equipped with a compacting and finishing screed.

### Example 4: Testing of the PERS

For a comparison of the performance of a PERS according to the invention with other wearing courses various tests are available. In particular, one or more properties of interest that may be improved compared to a known road surface are:
- Accoustic performance
- Skid resistance
- Resistance against ravelling
- Adhesion to underlying layer

To address these characteristics, laboratory testing can be conducted on PERS samples such as:
- Mechanical impedance by impact frequency measurement using a mechanical excitatory (shaker)
- Sound absorption by impedance tube method
- Airflow resistance by Müller-BBM measurement method
- Surface texture measurements with a laserprofilometer
- Ravelingtest by Aachener Raveling Tester (ARTe)
- Skid Resistance-with Interface Testing Device (SR-ITD),
- Pore pressure development by Moisture Induced Sensitivity Tester (MIST)
- Freeze/Thaw test
- Adhesive strength tests (PATTI)

In situ testing can be conducted on a PERS road surface:
- Noise reduction e.g. by Close-Proximity (CPX)-method and Statistical Pass By (SPB) method
- Skid resistance (friction) e.g. by Griptester

## Claims

1. Coated mineral particles for a wearing course, the coated mineral particles comprising a mineral core (1) and an elastic polymer coating (2b), **characterized in that** the coated mineral particles have a size, as determinable by sieving using a sieve with square mesh, of 10 mm or less, and **in that** the coating (2b) is composed of microparticles of a first polymer, in a matrix of a second polymer.

2. Coated mineral particles according to claim 1, wherein the microparticles of the first polymer are elastomer particles.

3. Coated mineral particles according 1 or 2, wherein the first polymer is a crosslinked elastomer selected from the group of copolymers of styrene and butadiene, such as poly(styrene-butadiene-styrene); natural rubber; alkylene-vinyl carboxylates polymers, such as ethylene-vinyl acetate and maleic anhydride-grafted ethylene-vinyl acetate; ground tire rubber; including combinations thereof,
the first polymer preferably comprising ground tire rubber.

4. Coated mineral particles according to any of the preceding claims, wherein the second polymer is a polyurethane.

5. Coated mineral particles according to any one of claims 1-4, wherein the weight to weight ratio of said first polymer to said second polymer is 1:2 to 5:1, preferably 0.75:1 to 4:1, in particular 1:1 to 2:1, more in particular about 1.25:1.

6. Coated mineral particles according to any of the preceding claims, wherein the mineral content of the particles is 60-90 wt. % based on the total weight of the particles, preferably 65-85 wt. %, in particular 70-80 wt. %, based on the total weight of the particles.

7. Coated mineral particles according to any of the preceding claims, wherein the elastic polymer coating content of the particles is 5-50 wt. % based on the total weight of the particles, preferably 10-45 wt. %, in particular 15-35 wt. %, based on the total weight of the particles.

8. Coated mineral particles according to any of the preceding claims, wherein on the outer surface of the elastic polymeric coating a binder (2c) is present, preferably a polyurethane-bitumen.

9. Coated mineral particles according to any one of the preceding claims comprising an adhesive layer (2a) between the mineral core (1) and the elastic polymer coating (2b), which adhesive layer preferably is epoxy-based.

10. Composition for making a wearing course, comprising coated mineral particles according to any of the preceding claims and a binder for binding the coated particles together.

11. Composition for making a wearing course according to claim 10, wherein the binder comprises an epoxy compound, in particular epoxy bitumen, and/or wherein the binder comprises a polyurethane.

12. Wearing course (3) composed of coated particles according to any of the claims 1-9 or a composition according to claim 10.

13. Poro-elastic road surface or floor comprising a wearing course (3) according to claim 12.

14. Poro-elastic road surface according to claim 13 or a floor according to claim 13, wherein the wearing coarse (3) has an interstitial void content of more than 20 %, preferably of 22-35 %, in particular of 24-32 %.

15. Poro-elastic road surface according claim 13 or 14 or a floor according to claim 13 or 14, wherein the poro-elastic road surface respectively floor is provided with a surface finish for improving skid resistance, wherein the surface finish comprises a mineral aggregate, preferably sand, and/or an organic polymer fibre, preferably an aramid fibre.

16. Method for making a poro-elastic road surface or floor according to any of the claims 13-15, comprising applying a layer comprising coated particles according to any of the claims 1-9 or a layer comprising a composition according to claim 10 or 11 to a surface of a base course (4) and binding the particles to form the poro-elastic road surface respectively floor on the base course (4).

## Patentansprüche

1. Beschichtete Mineralpartikel für eine Verschleißdecke, die beschichteten Mineralpartikel umfassend einen Mineralkern (1) und eine elastische Polymerbeschichtung (2b), **dadurch gekennzeichnet, dass** die beschichteten Mineralpartikel eine Größe haben, wie bestimmbar durch Sieben, unter Verwendung eines Siebs mit Quadratmaschen, von 10 mm oder weniger, und dadurch, dass die Beschichtung (2b) aus Mikropartikeln eines ersten Polymers in einer Matrix eines zweiten Polymers zusammengesetzt ist.

2. Beschichtete Mineralpartikel nach Anspruch 1, wobei die Mikropartikel des ersten Polymers Elastomerpartikel sind.

3. Beschichtete Mineralpartikel nach 1 oder 2, wobei das erste Polymer ein vernetztes Elastomer ist, ausgewählt aus der Gruppe der Copolymere von Styrol und Butadien, wie Poly(styrol-butadien-styrol); natürliches Gummi; Alkylenvinylcarboxylat-Polymere, wie Ethylenvinylacetat und Maleinsäureanhydrid-gepfropftes Ethylenvinylacetat; gemahlener Reifengummi; einschließlich Kombinationen davon,
das erste Polymer vorzugsweise umfassend gemahlenen Reifengummi.

4. Beschichtete Mineralpartikel nach einem der vorhergehenden Ansprüche, wobei das zweite Polymer ein Polyurethan ist.

5. Beschichtete Mineralpartikel nach einem der Ansprüche 1 - 4, wobei das Gewicht zu Gewicht Verhältnis des ersten Polymers zu dem zweiten Polymer 1:2 bis 5:1, vorzugsweise 0.75:1 bis 4:1, insbesondere 1:1 bis 2:1, besonderer etwa 1.25:1 ist.

6. Beschichtete Mineralpartikel nach einem der vorhergehenden Ansprüche, wobei der Mineralgehalt der Partikel 60-90 Gew.-% , basierend auf dem Gesamtgewicht der Partikel, vorzugsweise 65-85 Gew.-%, insbesondere 70-80 Gew.-%, basierend auf dem Gesamtgewicht der Partikel ist.

7. Beschichtete Mineralpartikel nach einem der vorhergehenden Ansprüche, wobei der elastische Polymerbeschichtungsgehalt der Partikel 5 - 50 Gew.-% , basierend auf dem Gesamtgewicht der Partikel, vorzugsweise 10-45 Gew.-%, insbesondere 15-35 Gew.-%, basierend auf dem Gesamtgewicht der Partikel ist.

8. Beschichtete Mineralpartikel nach einem der vorhergehenden Ansprüche, wobei auf der äußeren Oberfläche der elastischen Polymerbeschichtung ein Bindemittel (2c) vorhanden ist, vorzugsweise ein Polyurethanbitumen.

9. Beschichtete Mineralpartikel nach einem der vorhergehenden Ansprüche, umfassend eine Haftschicht (2a) zwischen dem Mineralkern (1) und der elastischen Polymerbeschichtung (2b), wobei die Haftschicht vorzugsweise Epoxid-basiert ist.

10. Zusammensetzung zum Herstellen einer Verschleißdecke, umfassend beschichtete Mineralpartikel nach einem der vorhergehenden Ansprüche und ein Bindemittel zum Zusammenbinden der beschichteten Partikel.

11. Zusammensetzung zum Herstellen einer Verschleißdecke nach Anspruch 10, wobei das Bindemittel eine Epoxyverbindung, insbesondere Epoxybitumen, umfasst und/oder wobei das Bindemittel ein Polyurethan umfasst.

12. Verschleißdecke (3) zusammengesetzt aus beschichteten Partikeln nach einem der Ansprüche 1 - 9 oder einer Zusammensetzung nach Anspruch 10.

13. Poroelastischer Straßenbelag oder Boden umfassend eine Verschleißdecke (3) nach Anspruch 12.

14. Poroelastischer Straßenbelag nach Anspruch 13 oder ein Boden nach Anspruch 13, wobei die Verschleißdecke (3) einen interstitiellen Hohlraumgehalt von mehr als 20 %, vorzugsweise von 22 - 35 %, insbesondere von 24 - 32 % hat.

15. Poroelastische Straßenbelag nach Anspruch 13 oder 14 oder ein Boden nach Anspruch 13 oder 14, wobei der poroelastische Straßenbelag bzw. Boden mit einem Oberflächenabschluss zum Verbessern der Rutschfestigkeit versehen ist, wobei der Oberflächenabschluss einen mineralischen Zuschlagstoff umfasst, vorzugsweise Sand, und/oder eine organische Polymerfaser, vorzugsweise eine Aramidfaser.

16. Verfahren zum Herstellen eines poroelastischen Straßenbelags oder Bodens nach einem der Ansprüche 13 - 15, umfassend Auftragen einer Schicht, umfassend beschichtete Partikel nach einem der Ansprüche 1 - 9, oder einer Schicht, umfassend eine Zusammensetzung nach Anspruch 10 oder 11, auf eine Oberfläche einer Grunddecke (4) und Binden der Partikel, um den poroelastischen Straßenbelag bzw. Boden auf der Grunddecke (4) zu bilden.

## Revendications

1. Particules minérales enrobées pour couche d'usure, les particules minérales enrobées comprenant un noyau minéral (1) et un revêtement polymère élastique (2b), **caractérisées en ce que** les particules minérales enrobées ont une taille, comme pouvant être déterminée par tamisage en utilisant un tamis ayant une maille carrée, de 10 mm ou moins, et **en ce que** le revêtement (2b) est composé de microparticules d'un premier polymère, dans une matrice d'un second polymère.

2. Particules minérales enrobées selon la revendication 1, dans lesquelles les microparticules du premier polymère sont des particules d'élastomère.

3. Particules minérales enrobées selon la revendication 1 ou 2, dans lesquelles le premier polymère est un élastomère réticulé choisi parmi le groupe constitué de copolymères de styrène et de butadiène, tels que le poly(styrène-butadiène-styrène) ; caoutchouc naturel ; polymères de carboxylates d'alkylène-vinyle, tels que acétate d'éthylène-vinyle et acétate d'éthylène-vinyle greffé à un anhydride maléique ; caoutchouc de pneumatique moulu ; y compris des combinaisons de ceux-ci,
le premier polymère comprenant de préférence un caoutchouc de pneumatique moulu.

4. Particules minérales enrobées selon l'une quelconque des revendications précédentes, dans lesquelles le second polymère est un polyuréthane.

5. Particules minérales enrobées selon l'une quelconque des revendications 1 à 4, dans lesquelles le rapport poids sur poids entre ledit premier polymère et ledit second polymère est compris entre 1:2 et 5:1, de préférence entre 0,75:1 et 4:1, en particulier entre 1:1 et 2:1, plus particulièrement d'environ 1,25:1.

6. Particules minérales enrobées selon l'une quelconque des revendications précédentes, dans lesquelles la teneur en minéral des particules est de 60 à 90 % en poids sur la base du poids total des particules, de préférence de 65 à 85 % en poids, en particulier de 70 à 80 % en poids, sur la base du poids total des particules.

7. Particules minérales enrobées selon l'une quelconque des revendications précédentes, dans lesquelles la teneur en revêtement polymère élastique des particules est de 5 à 50 % en poids sur la base du poids total des particules, de préférence de 10 à 45 % en poids, en particulier de 15 à 35 % en poids, sur la base du poids total des particules.

8. Particules minérales enrobées selon l'une quelconque des revendications précédentes, dans lesquelles un liant (2c) est présent sur la surface extérieure du revêtement polymère élastique, de préférence un bitume de polyuréthane.

9. Particules minérales enrobées selon l'une quelconque des revendications précédentes, comprenant une couche adhésive (2a) entre le noyau minéral (1) et le revêtement polymère élastique (2b), laquelle couche adhésive est de préférence à base d'époxy.

10. Composition pour la fabrication d'une couche d'usure, comprenant des particules minérales enrobées selon l'une quelconque des revendications précédentes et un liant pour lier les particules enrobées ensemble.

11. Composition pour la fabrication d'une couche d'usure selon la revendication 10, dans laquelle le liant comprend un composé époxy, en particulier du bitume époxy, et/ou dans laquelle le liant comprend un polyuréthane.

12. Couche d'usure (3) composée de particules enrobées selon l'une quelconque des revendications 1 à 9 ou d'une composition selon la revendication 10.

13. Sol ou surface de route poro-élastique comprenant une couche d'usure (3) selon la revendication 12.

14. Surface de route poro-élastique selon la revendication 13 ou sol selon la revendication 13, dans lequel la couche d'usure (3) présente une teneur en vides interstitiels supérieure à 20 %, de préférence de 22 à 35 %, en particulier de 24 à 32 %.

15. Surface de route poro-élastique selon la revendication 13 ou 14 ou sol selon la revendication 13 ou 14, dans lequel la surface de route poro-élastique, respectivement le sol, est munie d'un fini de surface pour améliorer une résistance au dérapage, dans lequel le fini de surface comprend un agrégat minéral, de préférence du sable, et/ou une fibre polymère organique, de préférence une fibre d'aramide.

16. Procédé de fabrication d'une surface de route poro-élastique ou d'un sol selon l'une quelconque des revendications 13 à 15, comprenant l'application d'une couche comprenant des particules enrobées selon l'une quelconque des revendications 1 à 9 ou d'une couche comprenant une composition selon la revendication 10 ou 11 sur une surface d'une couche de base (4) et la liaison des particules pour former la surface de route poro-élastique respectivement un sol sur la couche de base (4).
